(19) **Europäisches Patentamt / European Patent Office / Office européen des brevets**

(11) **EP 2 725 675 B1**

(12) **FASCICULE DE BREVET EUROPEEN**

(45) Date de publication et mention de la délivrance du brevet:
**24.02.2016 Bulletin 2016/08**

(51) Int Cl.:
*H02J 3/14* (2006.01)   *H02J 4/00* (2006.01)

(21) Numéro de dépôt: **13189941.1**

(22) Date de dépôt: **23.10.2013**

(54) **Procédé de distribution de courant électrique à des prises électriques dans un véhicule de transport**

Stromverteilungsverfahren an elektrische Steckdosen in einem Transportfahrzeug

Method for distributing electrical power to electrical outlets in a transport vehicle

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **25.10.2012 FR 1260171**

(43) Date de publication de la demande:
**30.04.2014 Bulletin 2014/18**

(73) Titulaire: **Zodiac Aero Electric**
**93100 Montreuil (FR)**

(72) Inventeurs:
• **Pradier, Jean-Clair**
**78800 Houilles (FR)**
• **Balbinot, Jean-Pierre**
**94270 Kremlin Bicetre (FR)**
• **Le Garrec, Stéphane**
**95100 Argenteuil (FR)**

(74) Mandataire: **Cabinet Plasseraud**
**66, rue de la Chaussée d'Antin**
**75440 Paris Cedex 09 (FR)**

(56) Documents cités:
EP-A2- 1 387 460      EP-A2- 2 166 636
WO-A2-2011/081943      DE-A1-102006 028 823
FR-A1- 2 823 027

## Description

L'invention concerne un procédé de distribution de courant électrique à des prises électriques, à des dispositifs de commande de siège (« Seat Actuation Controller ») et à des écrans vidéo (« In Flight Entertainment ») d'un véhicule de transport de type avion ou train.

Les prises électriques sont généralement destinées à recevoir des appareils électroniques personnels (« Passenger Electronic Device ») de type ordinateur portable, tablette graphique, lecteur audio.

Les dispositifs de commande de siège (« Seat Actuation Controller ») et les écrans vidéo (« In Flight Entertainment ») sont prioritaires et leur alimentation en courant électrique n'est jamais coupée.

Actuellement, le procédé de distribution mis en oeuvre dans beaucoup d'avions autorise la connexion d'appareils électroniques personnels sur toutes les prises électriques tant que la puissance électrique globale consommée par l'ensemble des prises électriques de la cabine reste sous un premier seuil. Quand ce seuil est atteint, les prises électriques déjà en service le restent mais aucune connexion supplémentaire d'appareils électroniques personnels sur les prises électriques restantes et non encore connectées à un appareil électronique n'est autorisée. Ainsi, un passager qui souhaite brancher son appareil électronique après une certaine durée de transport, par exemple après une heure de vol, peut ne plus recevoir de courant car un nombre important de passagers a déjà branché son appareil électronique de sorte que l'intensité instantanée du courant électrique distribué est importante. Ainsi, le procédé de distribution existant ne permet pas de garantir la distribution de courant électrique à l'ensemble des passagers puisque seuls les premiers appareils électroniques connectés sont servis jusqu'à l'atteinte du premier seuil. Au-delà, les demandes de courant électriques sont ignorées.

Un procédé de distribution de courant électrique à des prises électriques dans un vehicule de transport selon l'art antérieur est connu du document DE-A-10 2006 028823.

Le but de la présente invention est donc de proposer un procédé de distribution alternatif qui répartit plus équitablement la puissance électrique disponible à l'ensemble des passagers.

De plus, si la puissance électrique augmente encore après atteinte du premier seuil, que ce soit par augmentation de consommation des appareils électroniques ou par augmentation de la puissance électrique consommée par les dispositifs de commande de siège et les écrans vidéo, la distribution de courant électrique est coupée sur l'ensemble des prises électriques de la cabine et le système reprend son cycle d'autorisation au début.

Un autre but de l'invention est de réduire le nombre de coupures de courant à l'ensemble des passagers.

A cet effet, l'invention a pour objet un procédé de distribution de courant électrique d'une source de puissance à des prises électriques dans un véhicule de transport; le procédé étant mis en oeuvre par un système de distribution comprenant une source de puissance électrique centrale et au moins un ensemble d'unités de distribution, appelé colonne, comprenant des unités de distribution locales connectées entre elles et à la source de puissance par une ligne de puissance; chaque unité de distribution étant équipée d'un bloc de commande et de prises électriques propres à transmettre au bloc de commande une demande de distribution, lors de la connexion d'appareils électroniques auxdites prises électriques; le procédé comprenant les étapes suivantes :

a) délivrance de courant électrique aux prises électriques non encore connectées à un appareil électronique, sur réception d'une demande de distribution provenant desdites prises électriques;

b) détermination de l'intensité instantanée du courant électrique délivrée à l'ensemble des prises électriques;

caractérisé en ce que, le procédé comporte en outre les étapes suivantes :

c) comparaison de ladite intensité déterminée à l'étape b) à un seuil dit seuil maximal ;

d) lorsque l'intensité déterminée à l'étape b) est supérieure audit seuil maximal, sélection d'une prise électrique et arrêt de la délivrance de courant à ladite prise électrique sélectionnée; les étapes de sélection et d'arrêt étant mises en oeuvre tout en poursuivant l'étape a) de délivrance de courant à des prises électriques non encore connectées à un appareil électronique, sur réception de demande de distribution provenant desdites prises électriques.

Suivant des modes particuliers de réalisation, le procédé de distribution comporte l'une ou plusieurs des caractéristiques suivantes :

- l'étape de sélection est une étape de sélection de la prise électrique ayant délivré une intensité de courant électrique cumulée la plus élevée depuis le début de l'étape de délivrance de courant à cette prise électrique ;

- chaque unité de distribution est propre à distribuer du courant électrique à des dispositifs de commande d'actionneurs de siège et à des écrans vidéo; et le seuil maximal varie en fonction de la consommation instantanée desdits dispositifs de commande d'actionneurs de siège et desdits écrans vidéo ;

- les étapes a) à d) sont appliquées par le bloc de commande d'une unité de distribution, uniquement aux prises électriques de cette unité de distribution ;

- lorsque l'intensité déterminée à l'étape b) est inférieure audit seuil maximal, le procédé retourne à l'étape a) ;

- le procédé comporte en outre les étapes suivantes :

e) comparaison de l'intensité déterminée à l'étape b) à un seuil, dit seuil de sécurité ; ledit seuil de sécurité étant supérieur audit seuil maximal ; lorsque l'intensité déterminée à l'étape b) est supérieure audit seuil de sécurité,
f) sélection d'une prise électrique et arrêt de la délivrance de courant à ladite prise électrique sélectionnée;
g) détermination de l'intensité distribuée par les prises électriques de ladite unité de distribution;
h) comparaison de l'intensité déterminée à l'étape g) à un seuil, dit seuil d'hystérésis, ledit seuil d'hystérésis étant inférieur audit seuil maximal ; lorsque l'intensité déterminée à l'étape g) est supérieure audit seuil d'hystérésis, répétition des étapes f) à h) ;
lorsque l'intensité déterminée à l'étape g) est inférieure audit seuil d'hystérésis, le procédé retourne à l'étape b) de détermination de l'intensité distribuée aux prises électriques ;

- le procédé comporte en outre, pour chaque prise électrique pour laquelle la distribution de courant a été arrêtée, une étape d'autorisation de délivrance de courant à ladite prise électrique, ladite étape d'autorisation étant mise en oeuvre après une durée de relaxation ; ladite durée de relaxation débutant au moment de l'arrêt de la délivrance de courant à cette prise électrique ;
- ledit procédé étant mis en oeuvre dans un système de distribution comportant plusieurs colonnes; chaque colonne comprenant plusieurs unités de distribution connectées entre elles et à la source de puissance par une ligne de puissance ; le procédé comporte en outre les étapes suivantes :

  - détermination de l'intensité instantanée du courant électrique distribué aux prises électriques des unités de distribution de chaque colonne ;
  - comparaison de l'intensité déterminée à un pourcentage prédéfini d'un seuil maximal de colonne ;
  - calcul d'un nouveau seuil maximal spécifique à chaque colonne dans lesquelles l'intensité du courant distribué aux prises électriques des unités de distribution est inférieure audit pourcentage prédéfini dudit seuil maximal ; lesdites colonnes étant appelées colonnes excédentaires ; et
  - calcul d'un nouveau seuil maximal défini pour l'ensemble des colonnes dans lesquelles l'intensité du courant distribué aux prises électriques des unités de distribution est supérieure audit pourcentage prédéfini dudit seuil maximal ; lesdites colonnes étant appelées colonnes en déficit
  - mise en oeuvre des étapes a) à d) du procédé de distribution selon la revendication 1 en utilisant ledit nouveau seuil maximal spécifique à chaque colonne excédentaire sur les unités de distribution de chaque colonne excédentaire correspondante et en utilisant ledit nouveau seuil maximal défini pour l'ensemble des colonnes en déficit sur les unités de distribution des colonnes en déficit ;

- l'étape de calcul d'un nouveau seuil maximal spécifique à chaque colonne excédentaire comporte, pour chaque colonne excédentaire, les étapes suivantes :

  - calcul de la différence entre le seuil maximal et un facteur de l'intensité du courant électrique distribué aux prises électriques des unités de distribution de chaque colonne excédentaire; et
  - calcul du nouveau seuil maximal spécifique à chaque colonne excédentaire à partir de ladite différence calculée pour cette colonne excédentaire, et

le calcul du nouveau seuil maximal défini pour l'ensemble des colonnes en déficit est fonction de la somme desdites différences calculées pour l'ensemble des colonnes excédentaires ;
- le procédé comporte les étapes suivantes :

  - calcul d'un nouveau seuil d'hystérésis spécifique à chaque colonne excédentaire à partir du nouveau seuil maximal spécifique à chaque colonne excédentaire;
  - calcul d'un nouveau seuil d'hystérésis défini pour l'ensemble des colonnes en déficit à partir du nouveau seuil maximal défini pour l'ensemble des colonnes en déficit.

L'invention concerne également un programme d'ordinateur stocké sur un support d'informations, ledit programme comprenant des instructions permettant la mise en oeuvre du procédé de distribution selon l'une quelconque des caractéristiques mentionnées ci-dessus, lorsque ce programme est exécuté par un système informatique.
L'invention sera mieux comprise à la lecture de la description qui va suivre, donnée uniquement à titre d'exemple et faite en se référant aux dessins sur lesquels :

- la figure 1 est une vue schématique d'un système de distribution à une seule colonne dans lequel le procédé selon l'invention peut être mis en oeuvre ;
- la figure 2 est un schéma simplifié représentant une unité de distribution du système de distribution illustré sur la figure 1 ;
- la figure 3 est un schéma représentant un système de distribution à plusieurs colonnes dans lequel le procédé selon l'invention peut être mis en oeuvre ;
- la figure 4 est un diagramme représentant une partie des étapes du procédé selon l'invention ;

- la figure 5 est un diagramme représentant une autre partie des étapes du procédé selon l'invention ;
- la figure 6 est un diagramme représentant des étapes du procédé selon l'invention permettant de distribuer du courant électrique à une prise électrique après un arrêt de la délivrance de courant à celle-ci; et
- la figure 7 est un diagramme représentant des étapes du procédé selon l'invention permettant de faire varier dynamiquement des seuils de gestion de la distribution de puissance d'une colonne à l'autre.

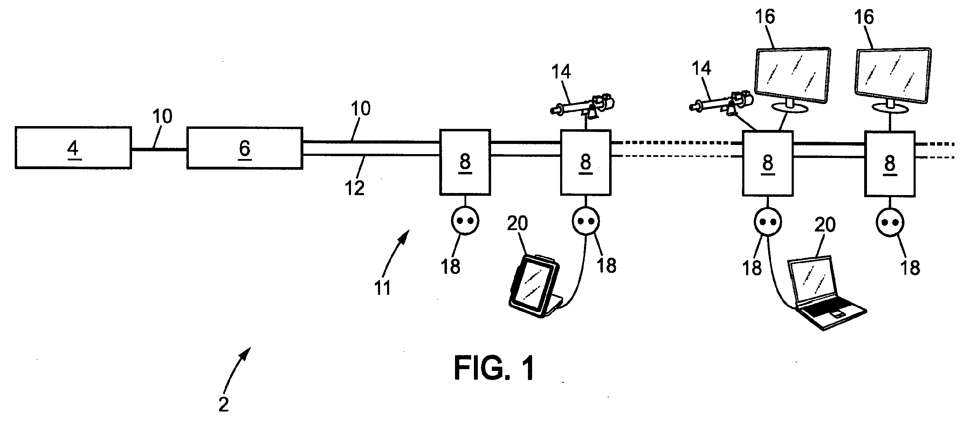

En référence à la figure 1, le système de distribution de courant électrique 2 comporte une source de puissance 4, une unité de commande 6 connectée à la source de puissance 4 par une ligne de puissance 10, et des unités de distribution 8 connectées en série à l'unité de commande 6 par la ligne de puissance 10. L'ensemble des unités de distribution 8 reliées entre elles forme une colonne 11.

La source de puissance 4, généralement appelée EPDS (de l'anglais « Electrical Power Distribution System »), est propre à délivrer aux unités de distribution 8, généralement appelées SPB (de l'anglais « Seat Power Box »), un courant alternatif triphasé de 115 volts par l'intermédiaire de la ligne de puissance 10.

L'unité de commande 6, généralement appelée MCU (de l'anglais « Master Control Unit »), est également reliée aux unités de distribution 8 par une ligne de communication 12 généralement appelée « keyline » en anglais. L'unité de commande 6 est adaptée pour transmettre aux unités de distribution 8 un signal discret par l'intermédiaire de cette ligne de communication 12. Ce signal discret contient un seuil maximal d'une unité $S_M^{SPB}$, un seuil de sécurité d'une unité $S_S^{SPB}$ et un seuil d'hystérésis d'une unité $S_H^{SPB}$.

L'unité de commande 6 est apte à déterminer les cas dans lesquels du courant électrique ne peut pas être distribué aux prises électriques 18 comme, par exemple, au moment du décollage et de l'atterrissage de l'avion. Dans ces cas, l'unité de commande donne une valeur nulle aux trois seuils transmis aux unités de distribution 8 afin que celles-ci n'autorisent plus l'alimentation en courant électrique des prises électriques 18 qui en font la demande.

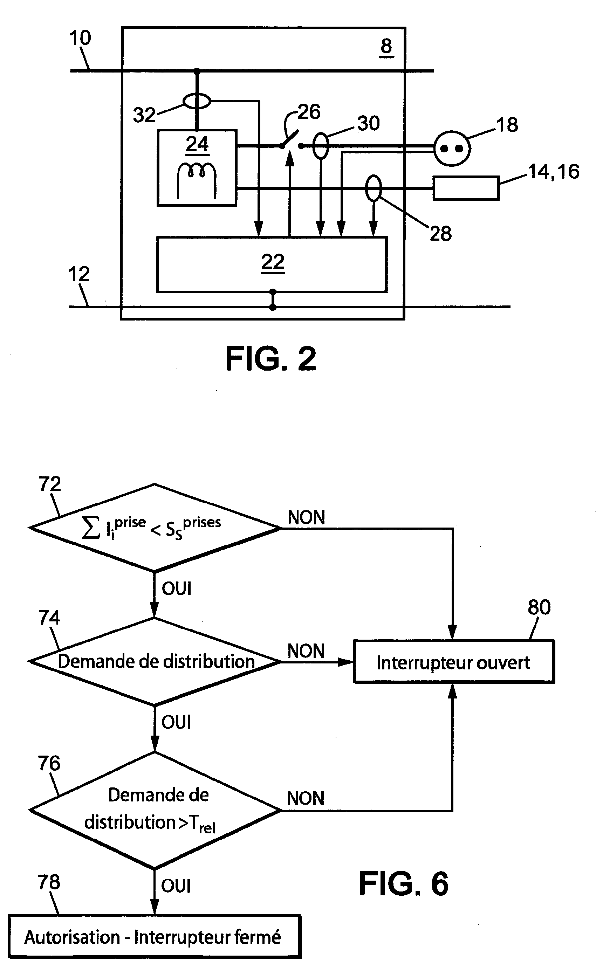

Chaque unité de distribution 8 est propre à alimenter des dispositifs de commande d'actionneurs de sièges 14, des écrans vidéo 16 et des prises électriques 18 sur lesquelles des appareils électroniques personnels 20 de type ordinateurs portables sont propres à être connectés. Pour simplifier la figure 2, seuls une prise électrique 18 et un rectangle représentant un dispositif de commande d'actionneur de siège 14 ou un écran vidéo 16 ont été représentés. En réalité, chaque unité de distribution 8 comporte au moins quatre prises électriques 18, au moins un dispositif de commande d'actionneur de siège 14 et au moins un écran vidéo 16.

En référence à la figure 2, chaque unité de distribution 8 comporte en outre un bloc de commande 22 relié à la ligne de communication 12 et un convertisseur de puissance 24 relié, d'une part, à la ligne de puissance 10 et, d'autre part, aux prises électriques 18, aux dispositifs de commande d'actionneurs de sièges 14 et aux écrans vidéo 16 pour les alimenter en puissance électrique après conversion de celle-ci.

Le bloc de commande 22 comporte une horloge, une mémoire et une unité de calcul. Il est, par exemple, constitué par un micro contrôleur. Le bloc de commande 22 est relié à chaque prise électrique 18 pour recevoir de celle-ci une demande de distribution générée par chaque prise électrique 18 lors de l'introduction physique d'une prise mâle d'un appareil électronique 20 extérieur dans celle-ci.

Un interrupteur 26 est, en outre, connecté entre chaque prise électrique 18 et le convertisseur 24. L'ouverture et la fermeture de ces interrupteurs 26 sont commandées par le bloc de commande 22.

Des capteurs de courant 28 sont reliés à l'entrée des dispositifs de commande des actionneurs de sièges 14 et des écrans vidéo 16. Des capteurs de courant 30 sont également reliés à l'entrée de chaque prise électrique 18 et un capteur de courant 32 est relié à l'entrée du convertisseur de puissance 24. L'ensemble de ces capteurs de courant 28, 30 et 32 est propre à délivrer des mesures de courant au bloc de commande 22.

En variante, l'unité de distribution 8 ne comporte pas de capteur de courant 32 à l'entrée du convertisseur 24. La mesure de courant consommé par l'unité de distribution 8 est alors obtenue par sommation des courants mesurés par les capteurs de courant 28 et 30. Les courants consommés par les composants électroniques de l'unité de distribution sont alors négligés.

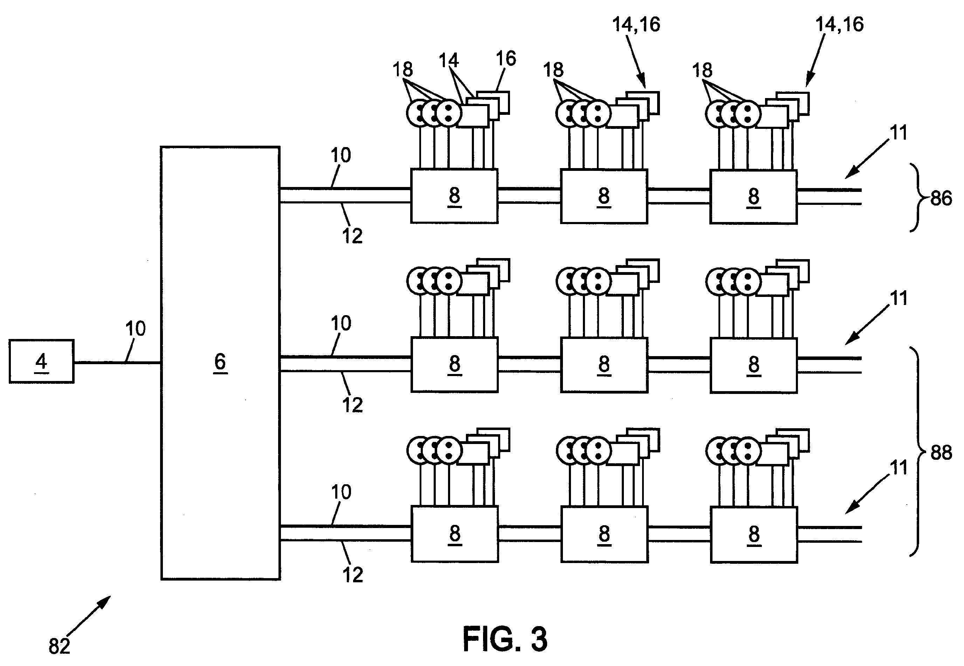

Le procédé selon l'invention peut également être mis en oeuvre dans un système de distribution 82 à plusieurs colonnes 11 tel que représenté sur la figure 3. Ce système de distribution 82 est similaire à celui illustré sur la figure 1. Les éléments constitutifs du système de distribution illustré sur la figure 3, identiques aux éléments constitutifs du système de distribution illustré sur la figure 1 portent les mêmes références et ne seront pas décrits une seconde fois.

Dans ce système de distribution 82, la ligne de puissance 10 provenant de la source de puissance 4 est dérivée dans l'unité de commande 6 en plusieurs lignes de puissance 10 auxquelles des unités de distribution 8 sont connectées en série. Chaque ensemble d'unités de distribution 8 reliées à la même ligne de puissance 10 forme une colonne 11.

Selon un premier mode de réalisation du procédé de distribution selon l'invention, la ligne de communication 12 est unidirectionnelle, et le procédé de distribution selon l'invention est mis en oeuvre par chaque module de commande 22 de chaque unité de distribution 8 pour les prises électriques 18 de cette unité de distribution 8. Le seuil de sécurité, le seuil maximal, et le seuil d'hystérésis sont des seuils définis pour l'ensemble des prises électriques 18 de chaque unité de distribution 18. Ils sont appelés seuil de sécurité des prises $S_S^{prises}$, seuil maximal des prises $S_M^{prises}$, et seuil d'hystérésis des prises $S_H^{prises}$.

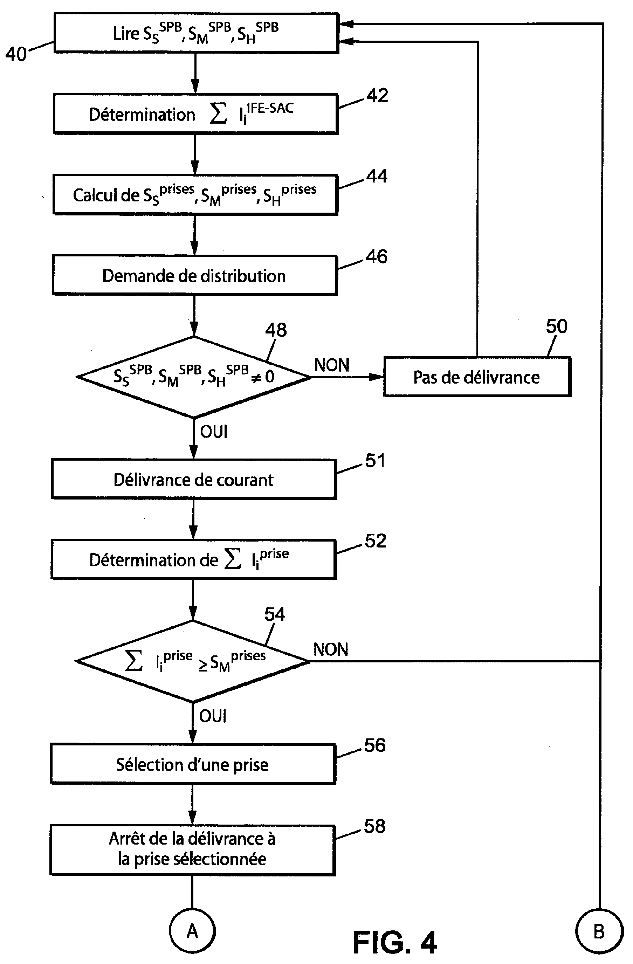

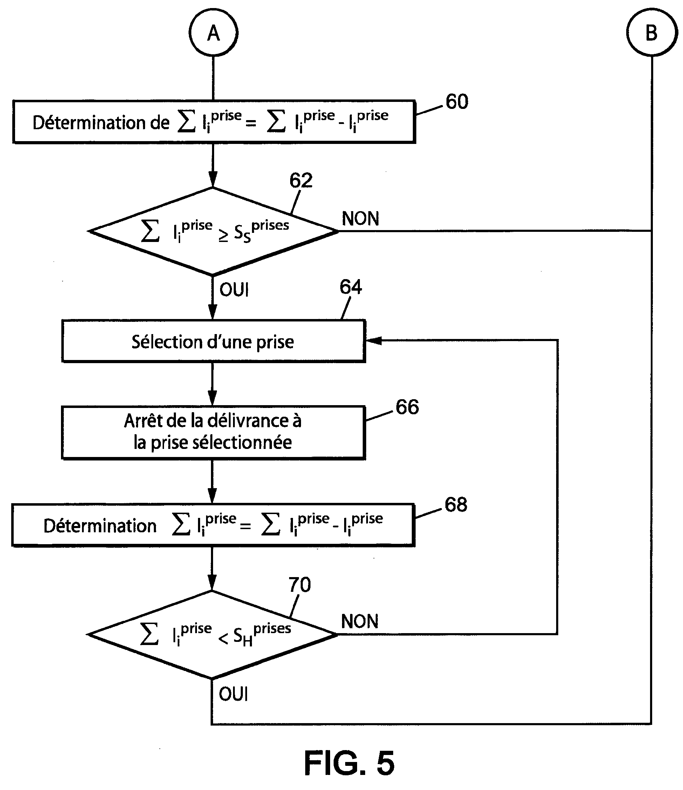

En référence aux figures 4 et 5, ce procédé de distribution débute par une étape 40 au cours de laquelle le bloc de commande 22 lit sur la ligne de communication 12 les seuils transmis par l'unité de commande 6.

Au cours d'une étape 42, les capteurs de courant 28 déterminent l'intensité instantanée consommée par l'ensemble des dispositifs de commande d'actionneurs de sièges 14 et par l'ensemble des écrans vidéo 16 connectés à l'unité de distribution 8.

Puis, au cours d'une étape 44, le bloc de commande 22 calcule un seuil de sécurité des prises $S_S^{prises}$, un seuil maximal des prises $S_M^{prises}$, et un seuil d'hystérésis des prises $S_H^{prises}$ à partir des formules suivantes :

$$S_S^{prises} = S_S^{PCB} - \sum I^{IFE-SAC}$$

$$S_M^{prises} = S_M^{PCB} - \sum I^{IFE-SAC}$$

$$S_H^{prises} = S_H^{PCB} - \sum I^{IFE-SAC}$$

dans lesquelles :

- $\sum I^{IFE-SAC}$ est l'intensité instantanée consommée par l'ensemble des dispositifs de commande d'actionneurs de sièges et des écrans vidéo déterminée à l'étape 42, et
- $S_S^{PCB}$, $S_M^{PCB}$, $S_H^{PCB}$ sont respectivement un seuil de sécurité d'une unité, un seuil maximal d'une unité et un seuil d'hystérésis d'une unité ; ces seuils ont été lus à l'étape 40.

Lorsque le bloc de commande 22 reçoit une demande de distribution d'une prise électrique 18 au cours d'une étape 46, il vérifie, d'abord, au cours de l'étape 48, que la valeur des seuils lus à l'étape 40 est différente de zéro.

Si les seuils ont une valeur nulle, le bloc de commande 22 commande l'interrupteur 26 au cours d'une étape 50 afin que celui-ci reste ouvert et que la prise électrique 18 qui a fait la demande de distribution ne reçoive pas de courant électrique.

Si les seuils ont une valeur différente de zéro, le bloc de commande 22 commande l'interrupteur 26 au cours d'une étape 51 afin que celui-ci soit fermé et que la prise électrique 18 qui en a fait la demande reçoive du courant électrique. Le bloc de commande 22 enregistre et additionne l'intensité du courant délivré à la prise électrique 18 à chaque instant afin de déterminer à tout instant l'intensité cumulée du courant électrique délivrée par cette prise électrique. Ainsi, le bloc de commande 22 stocke et met régulièrement à jour le cumul de l'intensité du courant du électrique délivré par chaque prise électrique 18 de l'unité de distribution 8.

Le bloc de commande 22 détermine ensuite, au cours d'une étape 52, l'intensité instantanée distribuée par l'ensemble des prises électriques 18 de l'unité de distribution 8 en sommant l'ensemble des intensités des courants mesurés par les capteurs de courant 30.

Au cours d'une étape 54, le bloc de commande 22 vérifie si l'intensité déterminée à l'étape 52 est supérieure ou égale au seuil maximal des prises $S_M^{prises}$. Lorsque cette intensité est inférieure au seuil maximal des prises $S_M^{prises}$, le procédé de distribution retourne à l'étape 40. Lorsque cette intensité est supérieure ou égale au seuil maximal des prises $S_M^{prises}$, le bloc de commande 22 sélectionne une prise électrique 18, au cours d'une étape 56. La prise électrique sélectionnée 18 est la prise électrique ayant distribuée une intensité de courant électrique cumulée la plus élevée depuis le début de l'étape 51 de délivrance de courant électrique à cette prise électrique 18.

Au cours d'une étape 58, le bloc de commande 22 commande l'arrêt de la distribution de courant électrique à la prise électrique 18 sélectionnée par commande de l'interrupteur 26 relié à celle-ci. Le bloc de commande 22 mémorise l'instant de déconnexion de cette prise électrique 18 et initialise à zéro le cumul de l'intensité du courant délivré à cette prise électrique 18.

Les étapes 46 à 54 sont répétées à chaque fois qu'un passager introduit une fiche mâle dans une prise électrique 18. Ainsi, la distribution de courant réalisée par le procédé selon l'invention est plus juste puisque les passagers dont les appareils électroniques 20 n'ont pas encore consommé de courant peuvent toujours en recevoir même si ils branchent tardivement leurs appareils électroniques à leur prise électrique 18. En effet, un passager qui fait une demande de distribution de courant, même après une heure de vol, par enfichage de son appareil électronique dans une prise électrique 18, reçoit toujours du courant sauf dans des cas extrêmes déterminés par l'unité de commande 6 tels que par exemple lors du décollage et de l'atterrissage de l'avion. Par contre, un passager dont l'appareil électronique 20 a déjà beaucoup consommé de courant depuis le début de sa connexion à une prise électrique 18 ne recevra plus de courant pendant un temps déterminé, comme explicité ci-après.

Pour garantir que l'intensité distribuée aux dispositifs de commande de sièges 14, aux écrans vidéo 16 et aux prises électriques 18 soit toujours inférieure à la puissance disponible dans la source de puissance 4, le procédé de distribution selon l'invention comporte également une étape de comparaison de l'intensité distribuée aux prises électriques 18 à un seuil de sécurité des prises $S_S^{prises}$.

A cet effet, au cours d'une étape 60, le bloc de commande 22 détermine l'intensité électrique instantanée délivrée par les prises électriques 18 de l'unité de distribution 8 après arrêt de la distribution à la prise électrique 18 sélectionnée. Cette détermination peut se faire soit par addition des courants mesurés par les capteurs de mesure 30, soit à partir de l'intensité déterminée à l'étape 52 à laquelle l'intensité délivrée à la prise électrique déconnectée sera retirée.

Puis, au cours d'une étape 62, l'intensité instantanée délivrée par l'ensemble des prises électriques 18 de l'unité de distribution 8 déterminée à l'étape 60 est comparée au seuil de sécurité des prises $S_S^{prises}$. Si l'intensité déterminée à l'étape 60 est inférieure au seuil de sécurité des prises $S_S^{prises}$, le procédé de distribution retourne à l'étape 40. Si cette intensité est supérieure ou égale au seuil de sécurité des prises $S_S^{prises}$, le bloc de commande 22 sélectionne une nouvelle prise électrique 18, au cours d'une étape 64, par exemple selon le même critère que lors de l'étape 56, à savoir sélection de la prise électrique ayant l'intensité du courant électrique cumulée la plus élevée depuis l'étape 51 de délivrance de courant à cette prise électrique 18.

Au cours d'une étape 66, le bloc de commande 22 commande l'arrêt de délivrance de courant électrique à la prise électrique 18 sélectionnée à l'étape 64, mémorise l'instant d'arrêt de délivrance de courant à cette prise électrique 18 et initialise à zéro le cumul d'intensité consommée par cette prise électrique 18.

Au cours d'une étape 68, le bloc de commande 22 détermine l'intensité électrique instantanée délivrée par les prises électriques 18 de l'unité de distribution 8 après arrêt de la délivrance de courant à la prise électrique 18 sélectionnée.

Au cours d'une étape 70, l'intensité déterminée à l'étape 68 est comparée à un seuil d'hystérésis des prises $S_H^{prises}$. La différence entre le seuil de sécurité des prises $S_S^{prises}$ et le seuil d'hystérésis des prises $S_H^{prises}$ correspond à une hystérésis destinée à garantir la stabilité du procédé de distribution. Le seuil d'hystérésis des prises $S_I^{prises}$ est proportionnel au seuil de sécurité des prises $S_S^{prises}$. Il est, par exemple, égal à 75 % du seuil de sécurité des prises $S_S^{prises}$.

Lorsque l'intensité déterminée à l'étape 68 est inférieure au seuil d'hystérésis des prises $S_H^{prises}$, le procédé de distribution retourne à l'étape 40.

Lorsque cette intensité est supérieure ou égale au seuil d'hystérésis $S_H^{prises}$, le procédé retourne à l'étape 64 de sélection d'une prise électrique 18 et d'arrêt de la délivrance de courant à la prise électrique sélectionnée 18. Les étapes 64 à 70 sont répétées et le courant est coupé, prise par prise, jusqu'à ce que l'intensité instantanée délivrée à l'ensemble des prises électriques 18 de l'unité de distribution soit inférieure au seuil d'hystérésis des prises $S_H^{prises}$.

En variante, le critère de sélection d'une prise au cours des étapes 56 et 64 est la sélection d'une prise électrique ayant la consommation instantanée la plus élevée.

Selon une autre variante, la prise sélectionnée au cours des étapes 56 et 64 est la prise électrique ayant été connectée à un appareil électronique 20 depuis la durée la plus longue. Dans ce cas, l'étape de demande de distribution 46 comporte une étape de mémorisation de l'instant de début de délivrance de courant et les étapes 58 et 66 d'arrêt de la délivrance de courant à la prise sélectionnée comportent une initialisation à zéro de l'instant de début de délivrance.

En référence à la figure 6, le procédé comporte, de plus, une boucle permettant de distribuer du courant à une prise électrique 18 pour laquelle la distribution a été arrêtée après une durée prédéfinie appelée durée de relaxation $T_{rel}$.

Ainsi, si, au cours d'une étape 72, l'intensité instantanée délivrée par l'ensemble des prises électriques 18 de l'unité de distribution 8 est inférieure au seuil de sécurité des prises $S_S^{pises}$, et si, au cours d'une étape 74, une prise électrique 18 transmet une demande de distribution au bloc de commande 22, le bloc de commande 22 vérifie si la durée entre l'instant de l'arrêt de délivrance mémorisé aux étapes 58 ou 66 pour cette prise électrique 18 est supérieure à la durée de relaxation $T_{rel}$.

Dans l'affirmative, le bloc de commande 22 commande la fermeture de l'interrupteur 26 monté sur la ligne d'alimentation de cette prise électrique 18. Après fermeture de cet interrupteur 26, le bloc de commande 22 enregistre et additionne le courant délivré par la prise électrique 18 afin de pouvoir déterminer à tout instant l'intensité cumulée délivrée par cette prise électrique. Par ailleurs, la nouvelle demande de distribution ne sera concrètement prise en compte que si l'utilisateur retire la fiche mâle de l'appareil électronique 20 de la prise électrique 18 et la réinsère.

Dans la négative, le bloc de commande 22 laisse l'interrupteur 26 ouvert, au cours d'une étape 80.

Dans la variante de réalisation dans laquelle la prise électrique 18 sélectionnée au cours des étapes 56 et 64 est la prise électrique ayant été connectée à un appareil électronique 20 depuis la durée la plus longue, le bloc de commande 22 mémorise, de plus, au cours de l'étape 78 l'instant auquel la prise électrique 18 a été connectée.

Le premier mode de réalisation de l'invention présente un inconvénient. Si plusieurs passagers ont leur appareil électronique connecté à une même unité de distribution, un arrêt de distribution électrique sera plus rapide chez ceux-ci que chez d'autres passagers connectés en nombre plus faible à une autre unité de distribution. Le courant non consommé par certaines unités de distribution n'est pas distribué à d'autres unités de distribution. Le deuxième mode de réalisation de l'invention palie en partie à cet inconvénient.

Le deuxième mode de réalisation du procédé de distribution selon l'invention est mis en oeuvre dans un système de distribution 82 ayant plusieurs colonnes 11 et dont la ligne de communication 12 est bidirectionnelle.

Selon le deuxième mode de réalisation, le procédé de distribution décrit en relation des figures 4, 5 et 6 est mis en oeuvre par l'unité de commande 6 pour l'ensemble des prises électriques 18 des unités de distribution 8 de la colonne 11. Le seuil de sécurité, le seuil maximal, et le seuil d'hystérésis sont des seuils définis pour l'ensemble des prises électriques 18 des unités de distribution 18 de chaque colonne 11 à partir de seuil de sécurité $S_S$, de seuil maximal $S_M$ et de seuil d'hystérésis $S_S$ prédéfinis pour l'ensemble de la cabine. Ils sont appelés seuil de sécurité de colonne $S_S^{col}$, seuil maximal de colonne $S_M^{col}$, et seuil d'hystérésis de colonne $S_H^{col}$.

Les étapes du procédé sont similaires à celles décrites dans le premier mode de réalisation et ne seront pas décrites à nouveau. Seules les particularités de ce mode de réalisation sont décrites ci-dessous.

Dans ce cas, l'étape 40 est remplacée par une étape au cours de laquelle chaque unité de distribution 8 transmet à l'unité de commande 6, sur la ligne de communication 12, la valeur de l'intensité instantanée délivrée par chaque prise électrique 18 ainsi que la valeur de l'intensité instantanée consommée par les dispositifs de commande d'actionneurs de sièges 14 et les écrans vidéo 16.

A l'étape 42, l'unité de commande 6 détermine l'intensité instantanée consommée par les dispositifs de commande d'actionneurs de sièges 14 et les écrans vidéo 16 raccordés à l'ensemble des unités de distribution 8 de la colonne 11.

A l'étape 44, le seuil maximal de colonne $S_M^{col}$, le seuil de sécurité de colonne $S_S^{col}$, et le seuil d'hystérésis de colonne $S_H^{col}$ sont calculés pour chaque colonne à partir de seuils prédéfinis pour l'ensemble de la cabine selon les formules ci-dessous.

$$S_M^{col} = (S_M / C) - I_{inst}^{IFE\text{-}SAC}$$

$$S_S^{col} = (S_S / C) - I_{inst}^{IFE\text{-}SAC}$$

$$S_H^{col} = (S_H / C) - I_{inst}^{IFE\text{-}SAC}$$

dans lesquels :

- $S_S$ est le seuil de sécurité prédéfini pour l'ensemble de la cabine,
- $S_M$ est le seuil maximal prédéfini pour l'ensemble de la cabine,
- Ss est le seuil d'hystérésis prédéfini pour l'ensemble de la cabine,
- $I_{inst}^{IFE\text{-}SAC}$ est le courant électrique instantanée consommé par les dispositifs de commande d'actionneurs de sièges 14 et les écrans vidéo 16 raccordés à l'ensemble des unités de distribution 8 de chaque colonne 11,

- C est le nombre de colonnes du système.

Au cours de l'étape 46, les demandes de distribution d'une prise électrique 18 sont réceptionnées par le bloc de commande 22 de chaque unité de distribution et sont transmises à l'unité de commande 6 par la ligne de communication 12.

Aux étapes 54, 62 et 70, l'intensité distribuée à l'ensemble des prises électriques 18 des unités de distribution 8 de la colonne 11 est comparée au seuil maximal de colonne $S_M^{col}$, au seuil de sécurité de colonne $S_S^{col}$, et au seuil d'hystérésis de colonne $S_H^{col}$ calculés à l'étape 44.

La prise électrique sélectionnée aux étapes 56 et 64 est la prise électrique ayant distribuée une intensité de courant cumulée la plus importante parmi l'ensemble des prises électriques des unités de distribution 8 de la colonne 11.

Le procédé de distribution selon le deuxième mode de réalisation de l'invention mis en oeuvre sur un système de distribution 82 ayant plusieurs colonnes 11 peut comporter une amélioration selon laquelle le seuil maximal de colonne $S_M^{col}$, le seuil de sécurité de colonne $S_S^{col}$ et le seuil d'hystérésis de colonne $S_H^{col}$ varient au cours du temps en fonction de l'intensité instantanée du courant demandée par les prises électriques 18 des unités de distribution 8 de chaque colonne par réaffectation de courant d'une colonne dans laquelle les passagers ont peu d'appareils électroniques 20 branchés sur des prises électriques 18 à une autre colonne où la demande de courant est plus importante.

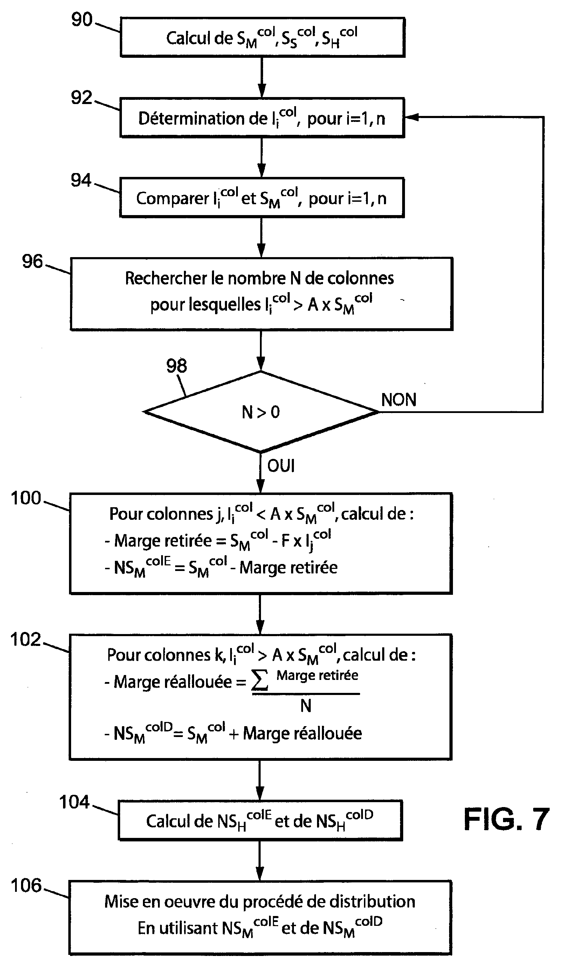

A cet effet, au cours d'une étape 90 représentée sur la figure 7, l'unité de commande 6 calcule le seuil maximal $S_M^{col}$, le seuil de sécurité $S_S^{col}$ et le seuil d'hystérésis $S_H^{col}$ définis pour chaque colonne 11 du système de distribution 82 à partir des formules suivantes :

$$S_M^{col} = S_M / \text{nombre de colonnes}$$

$$S_S^{col} = S_S / \text{nombre de colonnes}$$

$$S_H^{col} = S_H \times B$$

dans lesquels :

- B est un pourcentage prédéfini tel que, par exemple 75 %,
- $S_M$, $S_S$ et $S_H$ sont respectivement le seuil maximal, le seuil de sécurité et le seuil d'hystérésis définis pour l'ensemble des prises électriques 18 du système de distribution 82.

Au cours d'une étape 92, l'unité de commande 6 détermine l'intensité instantanée $I_i^{col}$ du courant distri-

bué aux prises électriques 18 des unités de distribution 8 de chaque colonne 11, à l'aide de capteurs de mesure de courant montés dans l'unité de commande 6 sur chaque ligne de puissance 10.

Au cours d'une étape 94, l'unité de commande 6 compare l'intensité $I_i^{col}$ du courant mesurée au cours de l'étape 92 pour chaque colonne avec le seuil maximal $S_M^{col}$ défini au cours de l'étape 90 pour chaque colonne.

Au cours d'une étape 96, l'unité de commande 6 recherche le nombre N de colonnes pour lesquelles l'intensité $I_i^{col}$ du courant déterminée au cours de l'étape 92 est supérieure à un pourcentage prédéfini A du seuil maximal de colonne $S_M^{col}$. Ces colonnes sont appelées ci-après des colonnes en déficit 86 de courant électrique, c'est-à-dire des colonnes pour lesquelles l'intensité $I_i^{col}$ demandée et distribuée (déterminée à l'étape 92) est supérieure ou légèrement inférieure au seuil maximal d'une colonne $S_M^{col}$. Le pourcentage prédéfini A est, par exemple, compris entre 80 et 99 % et est, de préférence, égal à 95 %. Ce pourcentage définit une marge pour éviter une instabilité par modifications successives des seuils. Les colonnes pour lesquelles l'intensité $I_i^{col}$ déterminée à l'étape 92 est inférieure au pourcentage prédéfini A du seuil maximal d'une colonne $S_M^{col}$, sont appelées ci-après colonnes excédentaires 88.

Au cours d'une étape 98, l'unité de commande 6 vérifie si le nombre N de colonnes en déficit 86 est supérieur à 0.

Lorsque ce nombre N est égal à 0, le procédé retourne à l'étape de détermination 92. Dans ce cas, l'intensité instantanée du courant distribué aux prises électriques 18 des unités de distribution 8 de l'ensemble des colonnes 11 est bien inférieure au seuil maximal $S_M^{col}$, marge comprise. Aucun seuil maximal de colonne n'est modifié.

Si ce nombre N est supérieur à 0, pour chaque colonne excédentaire 88, l'unité de commande 6 calcule, au cours d'une étape 100, la marge pouvant être retirée à cette colonne 88 et le nouveau seuil maximal $NS_M^{colE}$ spécifique à cette colonne, en utilisant les formules suivantes :

$$\text{Marge retirée} = S_M^{col} - F \times I_j^{col}$$

$$NS_M^{colE} = S_M^{col} - \text{Marge retirée}$$

dans lesquelles :

- F est un facteur prédéfini. Il est par exemple compris entre 101 et 120 % et de préférence égal à 105%.
- $I_j^{col}$ est l'intensité instantanée du courant distribué aux prises électriques 18 des unités de distribution 8 de la colonne j.
- $S_M^{col}$ est le seuil maximal défini à l'étape 90 pour l'ensemble des colonnes.

- Marge retirée est la différence d'intensité entre le seuil maximal de colonne et l'intensité instantanée réellement distribuée dans cette colonne j ;
- $NS_M^{colE}$ est le nouveau seuil maximal $NS_M^{colE}$ calculée pour la colonne j et spécifique à celle-ci.

Puis, au cours d'une étape 102, l'unité de calcul 6 calcule la marge réallouée et le nouveau seuil maximal $NS_M^{colD}$ défini pour l'ensemble des colonnes en déficit 86 selon la formule suivante :

$$- \text{Marge réallouée} = \frac{\sum \text{Marge retirée}}{N}$$

$$- NS_M^{colD} = S_M^{col} + \text{Marge réallouée}$$

dans laquelle :

- $\Sigma$ Marge retirée est la somme des marges retirées calculées au cours de l'étape 100 pour chaque colonne excédentaire 88 ; la sommation a lieu sur les marges
- N est le nombre de colonnes en déficit 86.
- $S_M^{col}$ est le seuil maximal défini à l'étape 90 pour l'ensemble des colonnes.
- $NS_M^{colD}$ est le nouveau seuil maximal défini pour l'ensemble des colonnes en déficit.

Au cours d'une étape 104, l'unité de commande 6 calcule un nouveau seuil d'hystérésis $NS_H^{colE}$ spécifique à chaque colonne excédentaire 88 à partir du nouveau seuil maximal $NS_M^{colE}$ calculé pour chaque colonne excédentaire 88 ainsi qu'un nouveau seuil d'hystérésis $NS_H^{colD}$ défini pour l'ensemble des colonnes en déficit 86 à partir du nouveau seuil maximal $NS_M^{colD}$ calculé pour l'ensemble des colonnes en déficit 86. A cet effet, chaque nouveau seuil d'hystérésis $NS_H^{colE}$, $NSH_H^{colD}$ est un pourcentage des nouveaux seuils maximaux $NS_M^{colE}$, $NS_M^{colD}$ calculés.

Au cours d'une étape 106, les étapes du procédé de distribution illustrées sur les figures 4 et 5 sont mises en oeuvre en utilisant le nouveau seuil maximal $NS_M^{colE}$ et le nouveau seuil d'hystérésis $NS_H^{colE}$ spécifique à chaque colonne excédentaire 88 sur les unités de distribution 8 de la colonne excédentaire 88 correspondante, et en utilisant le nouveau seuil maximal $NS_M^{colD}$ et le nouveau seuil d'hystérésis $NS_H^{colD}$ défini pour l'ensemble des colonnes en déficit 86 sur les unités de distribution 8 des colonnes en déficit 86. Le seuil de sécurité $S_S^{col}$ reste quant à lui inchangé.

Avantageusement, le procédé décrit en référence de la figure 7 permet de faire varier dynamiquement les seuils de puissance d'une colonne à l'autre pour distribuer le maximum de puissance disponible à chaque instant vers le maximum de passagers qui font des demandes de courant électrique par branchement de leur appareil électronique.

L'invention concerne également un programme d'ordinateur stocké sur un support d'informations, ledit programme comprenant des instructions permettant la mise en oeuvre du procédé de restitution décrit ci-dessus, lorsque ce programme est exécuté par un système informatique.

Le procédé de distribution permettant de modifier la valeur du seuil maximal et du seuil d'hystérésis de chaque colonne 11 peut être mis en oeuvre indépendamment du procédé de distribution illustré sur la figure 3. Il peut notamment être mis en oeuvre avec tout autre procédé de distribution de puissance électrique dans un système de distribution 82 à plusieurs colonnes comme celui illustré sur la figure 3.

L'étape de sélection d'une prise électrique choisie selon le critère de prise électrique ayant délivrée l'intensité instantanée cumulée la plus élevée peut être mise en oeuvre dans tout procédé de distribution comportant une étape de sélection et d'arrêt de distribution de courant à une prise électrique. Ce procédé de distribution peut être différent du procédé décrit en relation des figures 4 et 5, il peut être par exemple le procédé de distribution décrit dans le brevet EP 0 870 354 ou la demande de brevet française 1159422 au nom de la demanderesse.

En d'autres termes, l'invention concerne un procédé de distribution de courant électrique d'une source de puissance à des prises électriques 18 dans un véhicule de transport; le procédé étant mis en oeuvre par un système de distribution 2, 82 comprenant une source de puissance 4 électrique centrale et au moins un ensemble d'unités de distribution, appelé colonne 11, comprenant des unités de distribution 8 locales connectées entre elles et à la source de puissance 4 par une ligne de puissance 10 ; chaque unité de distribution 8 étant équipée d'un bloc de commande 22 et de prises électriques 18 propres à transmettre au bloc de commande 22 une demande de distribution, lors de la connexion d'appareils électroniques 20 auxdites prises électriques 18 ; le procédé comprenant les étapes suivantes :

a1) réception d'une demande de distribution 46 provenant d'une prise électrique (18) non encore connectée à un appareil électrique, dite prise électrique en attente ;

a2) délivrance de courant électrique à ladite prise électrique (18) en attente,

b) détermination 40, 42, 44, 52 de l'intensité instantanée du courant électrique délivrée à l'ensemble des prises électriques 18 déjà connectées à un appareil électrique;

c) comparaison 54 de ladite intensité déterminée à l'étape b) à un seuil dit seuil maximal $S_M^{prises}$, $S_M^{col}$;

d) lorsque l'intensité déterminée à l'étape b) est supérieure audit seuil maximal $S_M^{prises}$, $S_M^{col}$:

- calcul du cumul de l'intensité de courant électrique délivrée à chaque prise électrique déjà connectée à un appareil électrique depuis le début de l'étape de délivrance de courant 51 à cette prise électrique 18 ;
- sélection de la prise électrique 18 ayant délivrée une intensité de courant électrique cumulée la plus élevée ; et
- arrêt 58 de la délivrance de courant à ladite prise électrique sélectionnée 18.

**Revendications**

1. Procédé de distribution de courant électrique d'une source de puissance (4) à des prises électriques (18) dans un véhicule de transport; le procédé étant mis en oeuvre par un système de distribution (2, 82) comprenant une source de puissance (4) électrique centrale et au moins un ensemble d'unités de distribution, appelé colonne (11), comprenant des unités de distribution (8) locales connectées entre elles et à la source de puissance (4) par une ligne de puissance (10); chaque unité de distribution (8) étant équipée d'un bloc de commande (22) et de prises électriques (18) propres à transmettre au bloc de commande (22) une demande de distribution, lors de la connexion d'appareils électroniques (20) auxdites prises électriques (18); le procédé comprenant les étapes suivantes :

a) délivrance (51) de courant électrique aux prises électriques (18) non encore connectées à un appareil électronique (20), sur réception d'une demande de distribution (46) provenant desdites prises électriques (18);

b) détermination (40, 42, 44, 52) de l'intensité instantanée du courant électrique délivrée à l'ensemble des prises électriques (18) ;

c) comparaison (54) de ladite intensité déterminée à l'étape b) à un seuil dit seuil maximal ($S_M^{prises}$, $S_M^{col}$);

d) lorsque l'intensité déterminée à l'étape b) est supérieure audit seuil maximal ($S_M^{prises}$, $S_M^{col}$),

- sélection (56) de la prise électrique (18) ayant délivrée une intensité de courant électrique cumulée la plus élevée depuis le début de l'étape de délivrance de courant (51) à cette prise électrique (18) ; et

- arrêt (58) de la délivrance de courant à ladite prise électrique sélectionnée (18) ; les étapes de sélection (56) et d'arrêt (58) étant mises en oeuvre tout en poursuivant l'étape a) de délivrance (51) de courant à des prises électriques (18) non encore connectées à un appareil électronique (20), sur réception de demande de distribution (46) provenant desdites prises électriques (18),

dans lequel ledit procédé est mis en oeuvre dans un système de distribution (82) comportant plusieurs colonnes (11) ; chaque colonne (11) comprenant plusieurs unités de distribution (8) connectées entre elles et à la source de puissance (4) par une ligne de puissance (10) ; le procédé comporte en outre les étapes suivantes :

- détermination (92) de l'intensité instantanée du courant électrique distribué aux prises électriques (18) des unités de distribution (8) de chaque colonne (11) ;
- comparaison (94) de l'intensité déterminée à un pourcentage prédéfini (A) d'un seuil maximal de colonne ($S_M^{col}$);
- calcul (100) d'un nouveau seuil maximal ($NS_M^{colE}$) spécifique à chaque colonne dans lesquelles l'intensité du courant distribué aux prises électriques (18) des unités de distribution (8) est inférieure audit pourcentage prédéfini (A) dudit seuil maximal ($S_M^{col}$) ; lesdites colonnes (11) étant appelées colonnes excédentaires (88) ; et
- calcul (102) d'un nouveau seuil maximal ($NS_M^{colD}$) défini pour l'ensemble des colonnes dans lesquelles l'intensité du courant distribué aux prises électriques (18) des unités de distribution (8) est supérieure audit pourcentage prédéfini (A) dudit seuil maximal ($S_M^{col}$) ; lesdites colonnes (11) étant appelées colonnes en déficit (86) ;
- mise en oeuvre (106) des étapes a) à d) du procédé de distribution selon la revendication 1 en utilisant ledit nouveau seuil maximal ($NS_M^{colE}$) spécifique à chaque colonne excédentaire (88) sur les unités de distribution (8) de chaque colonne excédentaire (88) correspondante et en utilisant ledit nouveau seuil maximal ($NS_M^{coLD}$) défini pour l'ensemble des colonnes en déficit (86) sur les unités de distribution (8) des colonnes en déficit (86).

2. Procédé distribution selon la revendication 1, dans lequel chaque unité de distribution (8) est propre à distribuer du courant électrique à des dispositifs de commande d'actionneurs de siège (14) et à des écrans vidéo (16); et dans lequel le seuil maximal ($S_M^{prises}$, $S_M^{col}$) varie en fonction de la consommation instantanée desdits dispositifs de commande d'actionneurs de siège (14) et desdits écrans vidéo (16).

3. Procédé de distribution selon l'une quelconque des revendications parmi les revendications 1 et 2, dans lequel les étapes a) à d) sont appliquées par le bloc de commande (22) d'une unité de distribution (8), uniquement aux prises électriques (18) de cette unité de distribution (8).

4. Procédé de distribution selon l'une quelconque des revendications parmi les revendications 1 à 3, dans lequel lorsque l'intensité déterminée à l'étape b) est inférieure audit seuil maximal ($S_M^{prises}$, $S_M^{col}$), le procédé retourne à l'étape a).

5. Procédé de distribution selon l'une quelconque des revendications parmi les revendications 1 à 4, qui comporte en outre les étapes suivantes :

e) comparaison (62) de l'intensité déterminée à l'étape b) à un seuil, dit seuil de sécurité ($S_S^{pnses}$, $S_S^{col}$); ledit seuil de sécurité ($S_S^{prises}$, $S_S^{col}$) étant supérieur audit seuil maximal ($S_M^{prises}$, $S_M^{col}$);
lorsque l'intensité déterminée à l'étape b) est supérieure audit seuil de sécurité ($S_S^{prises}$, $S_S^{col}$),
f) sélection (64) d'une prise électrique (18) et arrêt (66) de la délivrance de courant à ladite prise électrique sélectionnée (18) ;
g) détermination (68) de l'intensité distribuée par les prises électriques (18) de ladite unité de distribution (8);
h) comparaison (70) de l'intensité déterminée à l'étape g) à un seuil, dit seuil d'hystérésis ($S_H^{prises}$, $S_H^{col}$), ledit seuil d'hystérésis ($S_H^{prises}$, $S_H^{col}$) étant inférieur audit seuil maximal ($S_M^{prises}$, $S_M^{col}$);
lorsque l'intensité déterminée à l'étape g) est supérieure audit seuil d'hystérésis ($S_H^{prises}$, $S_H^{col}$), répétition des étapes f) à h) ;
lorsque l'intensité déterminée à l'étape g) est inférieure audit seuil d'hystérésis ($S_H^{prises}$, $S_H^{col}$), le procédé retourne à l'étape b) de détermination (40, 42, 44, 52) de l'intensité distribuée aux prises électriques (18).

6. Procédé distribution selon l'une quelconque des revendications 1 à 5, **caractérisé en ce qu'**il comporte en outre, pour chaque prise électrique (18) pour laquelle la distribution de courant a été arrêtée, une étape d'autorisation (78) de délivrance de courant (80) à ladite prise électrique (18), ladite étape d'autorisation (78) étant mise en oeuvre après une durée de relaxation ($T_{rel}$) ; ladite durée de relaxation ($T_{rel}$) débutant au moment de l'arrêt de la délivrance de courant (58, 66) à cette prise électrique (18).

7. Procédé de distribution selon la revendication 1, dans lequel l'étape de calcul (100) d'un nouveau seuil maximal ($NS_M^{colE}$) spécifique à chaque colonne excédentaire (88) comporte, pour chaque colonne excédentaire (88), les étapes suivantes :

- calcul de la différence entre le seuil maximal ($S_M^{col}$) et un facteur (F) de l'intensité du courant électrique distribué aux prises électriques (18) des unités de distribution (8) de chaque colonne excédentaire (88) ; et

- calcul du nouveau seuil maximal ($NS_M^{colE}$) spécifique à chaque colonne excédentaire (88) à partir de ladite différence calculée pour cette colonne excédentaire (88),

et en ce que le calcul du nouveau seuil maximal ($NS_M^{colD}$) défini pour l'ensemble des colonnes en déficit (86) est fonction de la somme desdites différences calculées pour l'ensemble des colonnes excédentaires (88).

**8.** Procédé de distribution selon l'une quelconque des revendications 1 et 7, qui comporte les étapes suivantes :

- calcul (104) d'un nouveau seuil d'hystérésis ($NS_H^{SPBE}$) spécifique à chaque colonne excédentaire (88) à partir du nouveau seuil maximal ($NS_M^{colE}$) spécifique à chaque colonne excédentaire (88) ;

- calcul (104) d'un nouveau seuil d'hystérésis ($NS_H^{SPSD}$) défini pour l'ensemble des colonnes en déficit (86) à partir du nouveau seuil maximal ($NS_M^{colD}$) défini pour l'ensemble des colonnes en déficit (86).

**9.** Programme d'ordinateur stocké sur un support d'informations, ledit programme comprenant des instructions permettant la mise en oeuvre du procédé de distribution selon l'une quelconque des revendications 1 à 8, lorsque ce programme est exécuté par un système informatique.

**Patentansprüche**

**1.** Verfahren zur Verteilung von elektrischem Strom von einer Leistungsquelle (4) an elektrische Steckdosen (18) in einem Transportfahrzeug; wobei das Verfahren durch ein Verteilungssystem (2, 82) durchgeführt wird, das eine zentrale elektrische Leistungsquelle (4) und zumindest eine als Säule (11) bezeichnete Gruppe von Verteilungseinheiten umfasst, die lokale Verteilungseinheiten (8) umfasst, die durch eine Leistungsleitung (10) miteinander und mit der Leistungsquelle (4) verbunden sind; wobei jede Verteilungseinheit (8) mit einem Steuerungsblock (22) und elektrischen Steckdosen (18) ausgestattet ist, die geeignet sind, bei der Verbindung elektronischer Geräte (20) mit den elektrischen Steckdosen (18) eine Verteilungsanforderung an den Steuerungsblock (22) zu übertragen; wobei das Verfahren die folgenden Schritte umfasst:

a) Zufuhr (51) von elektrischem Strom zu den noch nicht mit einem elektronischen Gerät (20) verbundenen elektrischen Steckdosen (18) bei Empfang einer von den elektrischen Steckdosen (18) stammenden Verteilungsanforderung (46);

b) Bestimmung (40, 42, 44, 52) der momentanen Stärke des der Gesamtheit der elektrischen Steckdosen (18) zugeführten elektrischen Stroms;

c) Vergleich (54) der im Schritt b) bestimmten Stärke mit einem als maximaler Schwellenwert ($S_M^{prises}$, $S_M^{col}$) bezeichneten Schwellenwert;

d) wenn die im Schritt b) bestimmte Stärke höher als der maximale Schwellenwert ($S_M^{prises}$, $S_M^{col}$) ist,

- Auswahl (56) der elektrischen Steckdose (18), die seit dem Beginn des Schritts der Zufuhr (51) von Strom zu dieser elektrischen Steckdose (18) die höchste kumulierte Stromstärke zugeführt hat; und

- Unterbrechung (58) der Stromzufuhr zu der ausgewählten elektrischen Steckdose (18);

wobei die Schritte der Auswahl (56) und der Unterbrechung (58) durchgeführt werden, während der Schritt a) der Zufuhr (51) von Strom zu den noch nicht mit einem elektronischen Gerät (20) verbundenen elektrischen Steckdosen (18) bei Empfang einer von den elektrischen Steckdosen (18) stammenden Verteilungsanforderung (46) fortgesetzt wird,

wobei das Verfahren in einem mehrere Säulen (11) aufweisenden Verteilungssystem (82) durchgeführt wird; wobei jede Säule (11) mehrere Verteilungseinheiten (8) umfasst, die über eine Leistungsleitung (10) miteinander und mit der Leistungsquelle (4) verbunden sind; wobei das Verfahren ferner die folgenden Schritte aufweist:

- Bestimmung (92) der momentanen Stärke des an die elektrischen Steckdosen (18) der Verteilungseinheiten (8) jeder Säule (11) verteilten elektrischen Stroms;

- Vergleich (94) der bestimmten Stärke mit einem vordefinierten Prozentwert (A) eines maximalen Säulenschwellenwertes ($S_M^{col}$) ;

- Berechnung (100) eines neuen maximalen Schwellenwertes ($NS_M^{colE}$), der für jede Säule spezifisch ist, in denen die Stärke des an die elektrischen Steckdosen (18) der Verteilungseinheiten (8) verteilten Stroms kleiner als der vorbestimmte Prozentwert (A) des maximalen Schwellenwertes ($S_M^{col}$) ist; wobei die Säulen (11) als Überschusssäulen (88) bezeichnet werden; und

- Berechnung (102) eines neuen maximalen Schwellenwertes ($NS_M^{colD}$), der für die Gesamtheit der Säulen definiert ist, in denen die Stärke des an die elektrischen Steckdosen (18) der Verteilungseinheiten (8) verteilten Stroms größer als der vorbestimmte Prozentwert (A) des maximalen Schwellenwertes ($S_M^{col}$) ist; wobei die Säulen (11) als Defizitsäulen (86) bezeichnet werden;

- Durchführung (106) der Schritte a) bis d) des Verteilungsverfahrens nach Anspruch 1 unter Anwendung des für jede Überschusssäule (88) spezifischen neuen maximalen Schwellenwertes ($NS_M^{colE}$) auf die Verteilungseinheiten (8) jeder entsprechenden Überschusssäule (88) und unter Anwendung des für die Gesamtheit der Defizitsäulen (86) definierten neuen maximalen Schwellenwertes ($NS_M^{colD}$) auf die Verteilungseinheiten (8) der Defizitsäulen (86).

2. Verteilungsverfahren nach Anspruch 1, wobei jede Verteilungseinheit (8) geeignet ist, elektrischen Strom an Vorrichtungen (14) zur Steuerung von Sitzaktuatoren und an Videobildschirme (16) zu verteilen; und wobei sich der maximale Schwellenwert ($S_M^{prises}$, $S_M^{col}$) in Abhängigkeit vom momentanen Verbrauch der Vorrichtungen (14) zur Steuerung von Sitzaktuatoren und der Videobildschirme (16) verändert.

3. Verteilungsverfahren nach einem der Ansprüche 1 und 2, wobei die Schritte a) bis d) durch den Steuerungsblock (22) einer Verteilungseinheit (8) ausschließlich auf die elektrischen Steckdosen (18) dieser Verteilungseinheit (8) angewandt werden.

4. Verteilungsverfahren nach einem der Ansprüche 1 bis 3, wobei, wenn die im Schritt b) bestimmte Stärke kleiner als der maximale Schwellenwert ($S_M^{prises}$, $S_M^{col}$) ist, das Verfahren zum Schritt a) zurückkehrt.

5. Verteilungsverfahren nach einem der Ansprüche 1 bis 4, das ferner die die folgenden Schritte aufweist:

    e) Vergleich (62) der im Schritt b) bestimmten Stärke mit einem als Sicherheitsschwellenwert ($S_S^{prises}$, $S_S^{col}$) bezeichneten Schwellenwert; wobei der Sicherheitsschwellenwert ($S_S^{prises}$, $S_S^{col}$) größer als der maximale Schwellenwert ($S_M^{prises}$, $S_M^{col}$) ist; wenn die im Schritt b) bestimmte Stärke größer als der Sicherheitsschwellenwert ($S_S^{prises}$ $S_S^{col}$) ist,

    f) Auswahl (64) einer elektrischen Steckdose (18) und Unterbrechung (66) der Stromzufuhr zu der ausgewählten elektrischen Steckdose (18);

    g) Bestimmung (68) der durch die elektrischen Steckdosen (18) der Verteilungseinheit (8) verteilten Stärke;

    h) Vergleich (70) der im Schritt g) bestimmten Stärke mit einem als Hysterese-Schwellenwert ($S_H^{prises}$, $S_H^{col}$) bezeichneten Schwellenwert, wobei der Hysterese-Schwellenwert ($S_H^{prises}$, $S_H^{col}$) kleiner als der maximale Schwellenwert ($S_M^{prises}$, $S_M^{col}$) ist;
    wenn die im Schritt g) bestimmte Stärke größer als der Hysterese-Schwellenwert ($S_H^{prises}$, $S_H^{col}$) ist, Wiederholung der Schritte f) bis h);
    wenn die im Schritt g) bestimmte Stärke kleiner als der Hysterese-Schwellenwert ($S_H^{prises}$, $S_H^{col}$) ist, kehrt das Verfahren zum Schritt b) der Bestimmung (40, 42, 44, 52) der an die elektrischen Steckdosen (18) verteilten Stärke zurück.

6. Verteilungsverfahren nach einem der Ansprüche 1 bis 5, **dadurch gekennzeichnet, dass** es ferner für jede elektrische Steckdose (18), für welche die Stromverteilung unterbrochen wurde, einen Schritt der Zulassung (78) der Zufuhr von Strom (80) zur elektrischen Steckdose (18) aufweist, wobei der Zulassungsschritt (78) nach einer Relaxationsdauer ($T_{rel}$) durchgeführt wird; wobei die Relaxationsdauer ($T_{rel}$) zum Zeitpunkt der Unterbrechung der Stromzufuhr (58, 66) zu dieser elektrischen Steckdose (18) beginnt.

7. Verteilungsverfahren nach Anspruch 1, wobei der Schritt der Berechnung (100) eines für jede Überschusssäule (88) spezifischen neuen maximalen Schwellenwertes ($NS_M^{colE}$) für jede Überschusssäule (88) die folgenden Schritte aufweist:

    - Berechnung der Differenz zwischen dem maximalen Schwellenwert ($S_M^{col}$) und einem Faktor (F) der Stärke des an die elektrischen Steckdosen (18) der Verteilungseinheiten (8) jeder Überschusssäule (88) verteilten elektrischen Stroms; und
    - Berechnung des für jede Überschusssäule (88) spezifischen neuen maximalen Schwellenwertes ($NS_M^{colE}$) anhand der für jede Überschusssäule (88) berechneten Differenz,

und dadurch, dass die Berechnung des für die Gesamtheit der Defizitsäulen (86) definierten neuen maximalen Schwellenwertes ($NS_M^{colD}$) von der Summe der für die Gesamtheit der Überschusssäulen (88) berechneten Differenzen abhängig ist.

8. Verteilungsverfahren nach einem der Ansprüche 1 und 7, das die folgenden Schritte aufweist:

    - Berechnung (104) eines für jede Überschusssäule (88) spezifischen neuen Hysterese-Schwellenwertes ($NS_H^{SPBE}$) anhand des für jede Überschusssäule (88) spezifischen neuen maximalen Schwellenwertes ($NS_M^{colE}$);
- Berechnung (104) eines für die Gesamtheit der Defizitsäulen (86) definierten neuen Hysterese-Schwellenwertes ($NS_H^{SPBE}$) anhand des für die Gesamtheit der Defizitsäulen (86) definierten neuen maximalen Schwellenwertes ($NS_M^{colD}$).

9. Auf einem Informationsträger gespeichertes Computerprogramm, umfassend Anweisungen, welche die Durchführung des Verteilungsverfahrens nach einem der Ansprüche 1 bis 8 erlauben, wenn dieses Programm durch ein Informatiksystem ausgeführt wird.

**Claims**

1. A method of distributing electric current from a power source (4) to a plurality of electrical outlets (18) in a transport vehicle, the method being implemented by a distribution system (2, 82) that comprises a central source of electric power (4) and at least one set of distribution units, referred to as a column (11), comprising a plurality of local distribution units (8) that are connected to each other and to the power source (4) by a power line (10); each distribution unit (8) being equipped with a control module (22) and a plurality of electrical outlets (18) capable of transmitting a distribution request to the control module (22) when electronic devices (20) are connected to said electrical outlets (18); wherein the method comprises the steps of:

   a) supplying (51) of electric current to electrical outlets (18) not yet connected to an electronic device (20), upon receipt of a distribution request from said electrical outlets (18)
   b) determining (40, 42, 44, 52) the instantaneous electric current intensity supplied to all the electrical outlets (18);
   c) comparing (54) the instantaneous current intensity determined in step b) to a threshold referred to as a maximum threshold ($S_M^{outlets}$, $S_M^{col}$);
   d) if the current intensity determined in step b) is greater than said maximum threshold ($S_M^{outlets}$, $S_M^{col}$),

      - selecting (56) the electrical outlet (18) having supplied the highest cumulative intensity of electric current since the beginning of the step of supplying current (51) to that electrical outlet (18);
      - terminating (58) the supply of current to said selected electrical outlet (18); the steps of selecting (56) and terminating (58) being implemented while continuing step a) of supplying (51) current to electrical outlets (18) not yet connected to an electronic apparatus (20), upon receipt of a distribution request (46) from said electrical outlets (18),
- said method being implemented in a distribution system (82) having a plurality of columns (11), each column (11) comprising a plurality of distribution units (8) connected to each other and to the power source (4) by a power line (10); the method further comprises the following steps:

      - determining (92) the instantaneous current intensity supplied to the electrical outlets (18) of the distribution units (8) of each column (11);
      - comparing (94) the determined current intensity to a predetermined percentage (A) of a column maximum threshold ($S_M^{col}$);
      - calculating (100) a new maximum threshold ($NS_M^{colE}$) specific to each column, in which the intensity of the current delivered to the electrical outlets (18) of the distribution units (8) is less than said predetermined percentage (A) of said maximum threshold ($S_M^{col}$); said columns (11) being referred to as columns with a surplus (88); and
      - calculating (102) a new maximum threshold ($NS_M^{colD}$) defined for all of the columns, in which the intensity of the current delivered to the electrical outlets (18) of the distribution units (8) is greater than said predetermined percentage (A) of said maximum threshold ($S_M^{col}$); said columns (11) being referred to as columns with a deficit (86)

   - implementing (106) steps a) to e) of the distribution method according to claim 1, using said new maximum threshold ($NS_M^{colE}$) specific to each column with a surplus (88), on the distribution units (8) of each column with a surplus (88), and using said corresponding new maximum threshold ($NS_M^{colD}$) defined for all of the columns with a deficit (86), on the distribution units (8) of the columns with a deficit (86).

2. The distribution method according to claim 1, wherein each distribution unit (8) is capable of distributing electric current to the seat control devices (14) and the video screens (16), and wherein the maximum threshold ($S_M^{outlets}$, $S_M^{col}$) varies according to the instantaneous consumption of said seat control devices (14) and said video screens (16).

3. The distribution method according to any one of the claims 1 and 2, wherein steps a) to d) are applied by the control module (22) of a distribution unit (8) solely to the electrical outlets (18) of this distribution unit (8).

4. The distribution method according to any one of the claims 1 to 3, wherein, when the current intensity determined in step b) is less than said maximum threshold ($S_M^{outlets}$, $S_M^{col}$), the method returns to step a).

5. The distribution method according to any one of the claims 1 to 4, which further comprises the following steps:

   e) comparing (62) the current intensity determined in step b) with a threshold referred to as the safety threshold ($S_S^{outlets}$, $S_S^{col}$), said safety threshold ($S_S^{outlets}$, $S_S^{col}$) being greater than said maximum threshold ($S_M^{outlets}$, $S_M^{col}$); if the current intensity determined in step b) is greater than said safety threshold ($S_S^{outlets}$, $S_S^{col}$),
   f) selecting (64) an electrical outlet (18) and terminating (66) the supply of electric current to said selected electrical outlet (18);
   g) determining (68) the current intensity supplied by the electrical outlets (18) of said distribution unit (8);
   h) comparing (70) the current intensity determined in step g) to a threshold referred to as the hysteresis threshold ($S_H^{outlets}$, $S_H^{col}$), said hysteresis threshold ($S_H^{outlets}$, $S_H^{col}$) being less than said maximum threshold ($S_M^{outlets}$, $S_M^{col}$); if the current intensity determined in step g) is greater than said hysteresis threshold ($S_H^{outlets}$, $S_H^{col}$), repeating steps f) to h); if the current intensity determined in step g) is less than said hysteresis threshold ($S_H^{outlets}$ $S_H^{col}$), the method returns to step b) of determining (40, 42, 44, 52) the current intensity supplied to the electrical outlets (18).

6. The distribution method according to any of the claims 1 to 5, wherein it further comprises, for each electrical outlet (18) for which current distribution has been terminating, an authorization step (78) for current supply (80) to said electrical outlet (18), said authorization step (78) being implemented after a relaxation time ($T_{rel}$); said relaxation time ($T_{rel}$) beginning when terminating (58, 66) the supply of current (58, 66) to said electrical outlet (18).

7. The distribution method according to claim 1, wherein the step of calculating (100) a new maximum threshold ($NS_M^{colE}$) specific to each column with a surplus (88) comprises, for each column with a surplus (88), the following steps:

   - calculating the difference between the maximum threshold ($S_M^{col}$) and a current intensity factor (F) for the electric current distributed to the electrical outlets (18) of the distribution units (8) of each column with a surplus (88); and
   - calculating the new maximum threshold ($NS_M^{colE}$) specific to each column with a surplus (88), from said difference calculated for that column with a surplus (86), and wherein the calculation of the new maximum threshold ($NS_M^{colD}$) defined for all of the columns with a deficit (86) is a function of the sum of said differences calculated for all columns with a surplus (86).

8. The distribution method according to any one of the claims 1 and 7, which comprises the following steps:

   - calculating (104) a new hysteresis threshold ($NS_H^{SPBE}$) specific to each column with a surplus (88), from the new maximum threshold ($NS_M^{colE}$) specific to each column with a surplus (88);
   - calculating (104) a new hysteresis threshold ($NS_H^{SPBD}$) defined for all the columns with a deficit (86), from the new maximum threshold ($NS_M^{colD}$) defined for all the columns with a deficit (86).

9. A computer program stored on an information storage medium, said program comprising instructions for implementing the distribution method according to any one of claims 1 to 8, when said program is executed by a computer system.

FIG. 1

**FIG. 2**

72 — $\sum I_i^{prise} < S_S^{prises}$ — NON

OUI

74 — Demande de distribution — NON

OUI

76 — Demande de distribution $> T_{rel}$ — NON

OUI

78 — Autorisation - Interrupteur fermé

80 — Interrupteur ouvert

**FIG. 6**

**FIG. 3**

EP 2 725 675 B1

40 — Lire $S_S^{SPB}, S_M^{SPB}, S_H^{SPB}$

Détermination $\sum I_i^{IFE\text{-}SAC}$ — 42

Calcul de $S_S^{prises}, S_M^{prises}, S_H^{prises}$ — 44

Demande de distribution — 46

48
$S_S^{SPB}, S_M^{SPB}, S_H^{SPB} \neq 0$ — NON → Pas de délivrance — 50

OUI

Délivrance de courant — 51

Détermination de $\sum I_i^{prise}$ — 52

54
$\sum I_i^{prise} \geq S_M^{prises}$ — NON

OUI

Sélection d'une prise — 56

Arrêt de la délivrance à la prise sélectionnée — 58

A

FIG. 4

B

Ⓐ                                                            Ⓑ

60

Détermination de $\sum I_i^{prise} = \sum I_i^{prise} - I_i^{prise}$

62

$\sum I_i^{prise} \geq S_S^{prises}$    NON

OUI

64

Sélection d'une prise

66

Arrêt de la délivrance à
la prise sélectionnée

68

Détermination $\sum I_i^{prise} = \sum I_i^{prise} - I_i^{prise}$

70

$\sum I_i^{prise} < S_H^{prises}$    NON

OUI

**FIG. 5**

90 → Calcul de $S_M^{col}, S_S^{col}, S_H^{col}$

92 → Détermination de $I_i^{col}$, pour i=1, n

94 → Comparer $I_i^{col}$ et $S_M^{col}$, pour i=1, n

96 → Rechercher le nombre N de colonnes pour lesquelles $I_i^{col} > A \times S_M^{col}$

98 → N > 0

NON

OUI

100 → Pour colonnes j, $I_i^{col} < A \times S_M^{col}$, calcul de :
- Marge retirée = $S_M^{col} - F \times I_j^{col}$
- $NS_M^{colE} = S_M^{col}$ - Marge retirée

102 → Pour colonnes k, $I_i^{col} > A \times S_M^{col}$, calcul de :
- Marge réallouée = $\dfrac{\sum \text{Marge retirée}}{N}$
- $NS_M^{colD} = S_M^{col}$ + Marge réallouée

104 → Calcul de $NS_H^{colE}$ et de $NS_H^{colD}$

106 → Mise en oeuvre du procédé de distribution En utilisant $NS_M^{colE}$ et de $NS_M^{colD}$

**FIG. 7**

**EP 2 725 675 B1**

## RÉFÉRENCES CITÉES DANS LA DESCRIPTION

**Documents brevets cités dans la description**

- DE 102006028823 A
- EP 0870354 A
- FR 1159422